# EUROPEAN PATENT APPLICATION

(11) **EP 2 993 735 A1**
(43) Date of publication of application: **09.03.2016**
(21) Application number: 13893406.2
(22) Date of filing: 13.09.2013
(51) Int. Cl.: H01R 4/64, B23K 1/00, B60M 5/00

(54) **RAIL BOND**

(71) Applicant: Showa Tecs Co. Ltd., Koga-shi Fukuoka 811-3124 (JP); Fukuoka Prefectural Government, Fukuoka-shi, Fukuoka 812-8577 (JP)
(72) Inventor: YOSHINAGA Kenichi, Koga-shi Fukuoka 811-3124 (JP); EGASHIRA Takaki, Koga-shi Fukuoka 811-3124 (JP); YOSHIMURA Kenji, Kitakyushu-shi Fukuoka 807-0831 (JP); YAMAMOTO Keiichiro, Kitakyushu-shi Fukuoka 807-0831 (JP); TAKAMIYA Yoshihiro, Kitakyushu-shi Fukuoka 807-0831 (JP)
(74) Representative: Prüfer & Partner mbB Patentanwälte · Rechtsanwälte
(86) International application number: PCT/JP2013/074788
(87) International publication number: WO 2015/037112

(57) **Abstract**

A rail bond which achieves high durability and high reliability in response to vibration caused by running of trains is provided.
[Solving Means] A rail bond (1) according to the present invention includes a conductor (2) that electrically connects rails separately adjacent to each other, terminals (3) electrically connected to the conductor (2) and welded on side surfaces of the rails, and end-edges (4) at which the conductor (2) is connected to the terminals (3), wherein each of the terminals (3) has a welding region (5) welded on the side surface of the rail, and, in a direction almost perpendicular to the side surface of the rail, the welding region (5), the terminal (3), the end-edge (4), and the conductor (2) have a predetermined relationship with respect to at least one of positions, mutual shapes, lamination, and a lamination structure.

## Description

### Technical Field

The present invention relates to a rail bond that electrically connects separated rails to each other and to a rail bond that exerts high durability against vibration caused by train passing.

### Background Art

A plurality of separated rails are continuously laid. Trains run on the continuously laid rails. The continuous rails are coupled to each other enough to make trains possible to run thereon. However, the rails are physically separated from each other, and are not electrically connected to each other as a matter of course.

In this case, when a railroad crossing is installed on a railroad, the railroad crossing preferably senses the proximity of trains through the rails such that the railroad crossing automatically responds and operates. For this reason, in general, a method of causing a current to flow or applying a voltage to rails within a predetermined distance from the railroad crossing and blocking or transmitting a rail current when the wheels of trains reach the rails so as to cause the railroad crossing to detect the trains is employed. In this case, the length of one rail is limited, and several serial rails within a rail detection section must detect blocking or transmitting of a current by arrival of trains. For this reason, after and before the railroad crossing, the plurality of rails must be electrically connected to each other.

In an electrified section, an electric train receives electricity from a trolley line and returns electricity to a substation through rails. More specifically, since rails constitute a return feeder current circuit of a train current, a large train current required to drive trains flows in the rails. For this reason, a plurality of rails in a feeding section must be electrically connected to each other.

A rail bond is a device that electrically connects rails to each other to achieve the above object. The rail bond includes a conductor line which is a bunch of bare wires and one pair of terminals connected to the conductor line. Each of the pair of terminals is welded or bonded to each of two rails adjacent in a running direction.
Since one pair of terminals are connected to each other with the conductor line, the two rails connected to each other with the rail bond are electrically connected to each other. When this is executed on a predetermined number of rails before and after a railroad crossing, within a predetermined distance after and before the railroad crossing, trains can be detected such that a current is blocked or transmitted between the rails when the trains reach the rails within the distance.

As a result, when the trains reach the rails within the predetermined distance from the railroad crossing, the railroad crossing can detect a blocking or transmitting state of a current through the rails or the rail bonds. When the railroad crossing detects the current blocking state, the railroad crossing automatically responds to automatically pull crossing bars down. In contrast to this, the trains go away from the railroad crossing at a predetermined distance, the railroad crossing detects the current transmitting state to automatically raise the crossing bars.

In this manner, the rail bond is an important key device in a railroading. When a bonding state of the rail bond on a rail is poor, a current interruption state or a current conduction state is insufficiently detected at the railroad crossing, and the crossing bars may not be pulled down or raised disadvantageously. As a matter of course, when the rail bond drops out of the rails, the electric connection between the rails is lost to make it impossible to perform a correct operation at the railroad crossing. Similarly, in the same electrified section, an imbalance current is generated in a return current circuit obtained by rails, or the return current circuit is broken, power supply to an electric train is stopped to fail in an operation of trains. In this manner, when a trouble occurs in an operation at a railroad crossing, or when an operation of trains fails, a serious problem such as an accident may be caused.

For this reason, the rail bond serving as an important key device in a railroading requires high durability and high reliability.

Thus, with respect to the rail bond, several techniques are proposed (for example, see Patent Literature 1 and Patent Literature 2).

### Citation List

### Patent Literature

PTL 1: Japanese Patent Application Laid-Open No. 7-32839
PTL 2: Japanese Patent Application Laid-Open No. 2004-273403

### Summary of Invention

### Technical Problem

Patent Literature 1 discloses a bonding method for a rail bond including: the step of forming a surface layer cleaning unit on a longitudinal end-side edge portion of a single rail; the step of forming a solder electrodeposition layer on a surface of the surface layer cleaning unit; the step of bringing a terminal of a rail bond electric wire into contact with a surface of the solder electrodeposition layer; and the step of applying a solder to a gap between a terminal and the solder electrodeposition layer. Patent Literature 1 discloses a bonding method of bonding a rail bond to a rail, and especially discloses a method of efficiently bond the rail bond at a low cost.
   However, Patent Literature 1 does not describe the bonding strength and the durability of the rail bond. For this reason, the technique according to Patent Document 1 cannot solve the problem of improvement of the durability of the rail bond in use and the reliability of the rail bond.
Patent Literature 2 discloses a rail bond terminal that has a planar portion fixed to an upper surface of a rail bottom portion and has one hole or a plurality of holes formed in the planar portion. Patent Document 2 discloses a technique that forms a hole in a bonding surface of the rail bond terminal and improves bonding strength with the hole. For example, the technique according to Patent Document 2 considers a technique that prevents bonding strength from being degraded by taking excessive solder in the hole when the bonding surface is to be soldered.

However, the rail bond includes not only a terminal having a bonding surface but also a conductor line connecting terminals to each other. The conductor line protrudes from a terminal bonded on a side surface of a rail and extends to an adjacent rail for the structure of the rail bond. For this reason, a connecting portion between the terminal and the conductor line inevitably floats from the side surface of the rail. For this reason, the connection portion cannot be supported by anything, and is a place which is weak against an external load. The rail bond regularly receives vibration from trains running on rails, and the vibration regularly acts on the connection portion which is weak against an external load. As a result, the conductor line and the connection portion which are floated from the side surface of the rail vibrate to generate a heavy load in a direction crossing the bonding surface of the terminal. Thus, the bonding surface disadvantageously gradually peels.

The technique according to Patent Document 2 improves bonding strength of a terminal by partially improving a bonding surface. However, the technique cannot solve the problem of coping vibration and load applied to the conductor line and the connection portion.

As described above, the conventional technique cannot cope with the following problems.
(Problem 1) Vibration acting on a rail bond makes it difficult to cope with a load on a connection portion between a terminal and a conductor line.
(Problem 2) It is difficult to cope with peeling of a bonding surface caused by a connection portion.
(Problem 3) A rail bond cannot be prevented from being deteriorated on the basis of Problem 1 and Problem 2.

The present invention, in consideration of the above problems, provides a rail bond that copes with vibration generated by running of trains to achieve high durability and high reliability.

### Solution to Problems

In consideration of the above problems, a rail bond according to the present invention includes a conductor that electrically connects rails separately adjacent to each other, terminals electrically connected to the conductor and welded on side surfaces of the rails, and end-edges at which the conductor is connected to the terminals. Each of the terminals has a welding region welded on the side surface of the rail, and, in a direction almost perpendicular to the side surface of the rail, the welding region, the terminal, the end-edge, and the conductor have a predetermined relationship with respect to at least one of positions, mutual shapes, lamination, and a lamination structure. Advantageous Effects of Invention

The rail bond according to the present invention, a conductor line, an end-edge, a terminal, and a welding layer constituting the rail bond are laminated with a predetermined relationship, a problem occurring in the end-edge (connection portion between the conductor line and the terminal) on which vibration is most severely influenced can be minimized. In particular, even though vibration stress to the end-edge is strong, the welding layer is not easily peeled.

Since the welding layer is not formed on a bottom surface of the end-edge, even though vibration acts on the end-edge to give vibration to the end-edge, the vibration from the end-edge is not easily directly influenced on the welding layer. As a result, the welding layer is not easily peeled.

When a ratio of areas or lengths of the end-edge and the terminal satisfies a predetermined condition, even though vibration of the end-edge is strong, the welding layer is not easily peeled.

In addition, the presence of a gap between the conductor line and the terminal reduces stress on the welding surface caused by vibration of the end-edge on the end face of the terminal to make it difficult to peel the welding layer.

### Brief Description of Drawings

Figure 1 is a block diagram for explaining problems of a rail bond according to a reference.
Figure 2 is an explanatory diagram of a drop-out mechanism of a rail bond according to a conventional technique of the present invention.
Figure 3 is a side view of a rail bond according to the first embodiment of the present invention.
Figure 4 is a photograph of a rail to which the rail bond according to the first embodiment of the present invention is applied.
Figure 5 is a side view of the rail bond according to the first embodiment of the present invention.
Figure 6 is a graph showing a relationship between a ratio of a length and a width of a terminal and stress acting on the terminal.
Figure 7 is a table showing a test-production result of a prototype of a rail bond in which a ratio of a terminal length and an end-edge length and a ratio of a terminal area and an end-edge surface in the first embodiment of the present invention.
Figure 8 is a front view of a rail bond according to a second embodiment of the present invention.
Figure 9 is a side view of the rail bond according to the second embodiment of the present invention.
Figure 10 is a graph showing a result obtained by statically analyzing an effect of a gap in the second embodiment of the present invention.
Figure 11 is a bottom view of a rail bond according to a third embodiment of the present invention.
Figure 12 is a bottom view of the rail bond according to the third embodiment of the present invention.

### Description of Embodiments

A rail bond according to a first invention of the present invention includes a conductor that connects rails separately adjacent to each other, terminals electrically connected to the conductor and welded on side surfaces of the rails, and end-edges at which the conductor is connected to the terminals. Each of the terminals has a welding region welded on the side surface of the rail, and, in a direction almost perpendicular to the side surface of the rail, the welding region, the terminal, the end-edge, and the conductor have a predetermined relationship with respect to at least one of positions, mutual shapes, lamination, and a lamination structure.

With this configuration, the durability of the rail bond in use can be improved.

In the rail bond according to a second embodiment of the present invention, in addition to the first invention, the terminal has a bottom surface facing the side surface of the rail, the welding region is included in the bottom surface, the conductor is a bunch of bare wires, and the end-edge is formed on an upper surface of the terminal and has a hole in which the conductor is inserted and clamped.

With the configuration, the rail bond can electrically connect the separated rails to each other.

In a rail bond according to a third invention of the present invention, in addition to the first or second invention, the welding region, the terminal, the end-edge, and the conductor are laminated on the side surface of the rail in the order named.

With the configuration, the rail bond can exert high durability against vibration from trains running on the rails.

In a rail bond according to a fourth invention of the present invention, in addition to any one of the first to third inventions, the welding region forms a welding layer with a welding agent by welding the terminal on the side surface of the rail.

With the configuration, the rail bond is applied to the side surface of the rail with the welding layer corresponding to the welding region. As a result, welding is not performed in an opening region, and peeling progress from an end face of the terminal, can be reduced.

In a rail bond according to a fifth invention of the present invention, in addition to any one of the first to fourth inventions, an end-edge region where the end faces the side surface of the rail has an opening region that does not include the welding region.

With the configuration, peeling does not easily progress from the end face of the terminal, and the rail bond is easily prevented from being peeled and dropping out.

In a rail bond according to a sixth invention of the present invention, in addition to the fifth embodiment, an area of the opening region is 50% or more of the area of the end-edge region.

With this configuration, the terminal is not easily peeled.

In a rail bond according to a seventh invention of the present invention, in addition to any one of the first to sixth inventions, a terminal length which is a length of the terminal along a direction of the side surface of the rail is twice or more a terminal width which is a width of the terminal along a height direction of the rail, preferably, 2.3 times or more the terminal width.

With this configuration, the terminals withstands stress of vibration.

In a rail bond according to an eighth invention of the present invention, in addition to any one of the first to seventh inventions, the terminal length which is a length of the terminal along a side direction of the rail is three times or more the end-edge length which is a length of the end-edge along the side direction of the rail, preferably, four times or more the end-edge length.

With the configuration, the rail bond has high durability against peeling and dropout.

In a rail bond according to a ninth invention of the present invention, in addition to any one of the fifth to eighth inventions, a terminal area which is an area of the bottom surface of the terminal facing the side surface of the rail is four times or more an area of the end-edge region, preferably, five times or more the area of the end-edge region.

With the configuration, the rail bond achieves high durability in use.

In a rail bond according to a tenth invention of the present invention, in addition to any one of the first to ninth inventions, an area of the welding region is 80% or less of the terminal area.

With this configuration, the terminal can optimize a balance between welding force obtained by the welding region and stress response obtained by the opening region.

In a rail bond according to an eleventh invention of the present invention, in addition to any one of the first to tenth inventions, the end-edge is formed on one edge of the terminal, and the conductor fixed at the end-edge extends in an opposite direction of an extending direction of the terminal.

With the configuration, the rail bond has high durability against vibration stress while electrically connecting adjacent rails to each other.

In a rail bond according to a twelfth invention of the present invention, in addition to the first to eleventh inventions, on the terminal, a bottom surface area of a bottom surface welded on the side surface of the rail is larger than a surface area of an upper surface on an opposite side of the bottom surface.

With the configuration, peeling of the terminal from the end face can be reduced.

In a rail bond according to a thirteenth invention of the present invention, in addition to the twelfth invention, at least a part of an outer periphery of the terminal has a notch extending from the upper surface of the terminal to the bottom surface thereof, and, preferably, has a notch at a part under the conductor on the outer periphery of the terminal.

With the configuration, the upper surface area of the terminal is smaller than the bottom surface area thereof, and peeling of the terminal from the end face of the terminal can be reduced.

In a rail bond according to a fourteenth invention of the present invention, in addition to any one of the first to thirteenth inventions, the end-edge is joined to one edge of the terminal in the longitudinal direction, and, at the joint portion, the end face of the terminal reaches the outside of the end face of the end-edge.

With the configuration, by stress of vibration which is maximum at the end-edge, peeling of the terminal from an end-edge side is reduced.

In the rail bond according to a fifteenth invention of the present invention, in addition to the fourteenth invention, the joint portion has a gap which the end-edge does not reach between the conductor and the terminal.

With the configuration, the terminal becomes able to cope with stress caused by vibration acting on the end-edge or the conductor.

In a rail bond according to a sixteenth invention of the present invention, in addition to any one of the first to fifteenth inventions, the bottom surface of the terminal has a groove having a predetermined pattern.

In a rail bond according to a seventeenth invention of the present invention, in addition to the sixteenth invention, the groove having the predetermined pattern is a grid groove or a slant grid groove.

With the configuration, bubbles generated in the welding layer are easily released, and the welding layer can achieve high strength.

In a rail bond according to an eighteenth invention of the present invention, in addition to any one of the first to seventeenth inventions, the upper surface of the terminal has a single groove or a plurality of grooves in a direction along rails.

With the configuration, the welding force of the terminal can be improved to make it possible to minimize breakdown of the terminal.

Embodiments of the present invention will be described below with reference to the accompanying drawings.

### (Reference)

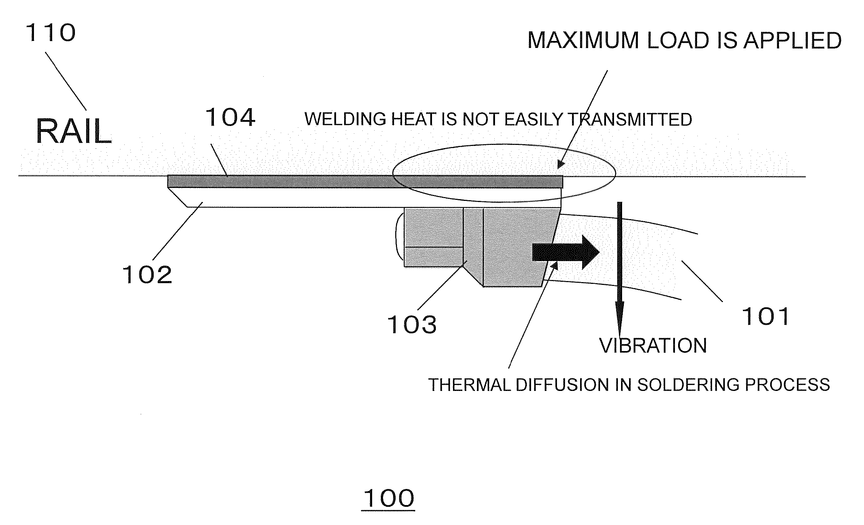

First, a mechanism in which a welding surface of a rail bond is peeled by an external load such as vibration will be described. Fig. 1 is a block diagram for explaining problems of a rail bond according to a reference. Fig. 1 shows a state in which a rail bond according to a conventional technique is welded on a rail.

A rail bond 100 is attached by being welded on a side surface of a rail 110. The rail bond 100 includes a conductor 101, a terminal 102, an end-edge 103, and a welding region 104. The conductor 101 is a bunch of bare wires. The terminal 102 is welded on a side surface of the rail 110. The terminal 102 has a hole into which the conductor 101 is inserted, and the conductor 101 is inserted into this hole and fixed therein. This fixation forms an end-edge 103. The terminal 102 has a welding region 104 welded on the side surface of the rail 110 on a surface facing the side surface of the rail 110. Solder or the like is disposed in the welding region 104 and heated to weld the welding region 104. As a result, the rail bond 100 is welded on and attached to the side surface of the rail 110.

In this case, in common welding of the conventional rail bond, several problems occur as shown in Fig. 1.
(Problem 1) When solder in the welding region 104 located on the bottom surface of the end-edge 103 is heated, heat diffuses through the conductor 101. For this reason, the solder is not sufficiently heated, and the degree of welding on the bottom surface of the end-edge 103 is deteriorated.
(Problem 2) Due to Problem 1, the welding region 104 is unevenly welded.
(Problem 3) Vibration from rails is concentrated on the conductor 101. In particular, for the structure of the conductor 101, the vibration is concentrated such that the conductor 101 is reciprocated with respect to the side surface of the rail 110.
(Problem 4) Due to Problem 3, the maximum load is applied to an edge (edge of the welding region 104 on the end-edge 103 side) of the terminal 102 on the end-edge 103 side.

When Problem 1 to Problem 3 are combined to each other, the rail bond 100 is gradually peeled from the edge of the terminal 102 on the end-edge 103 side and then drops out.

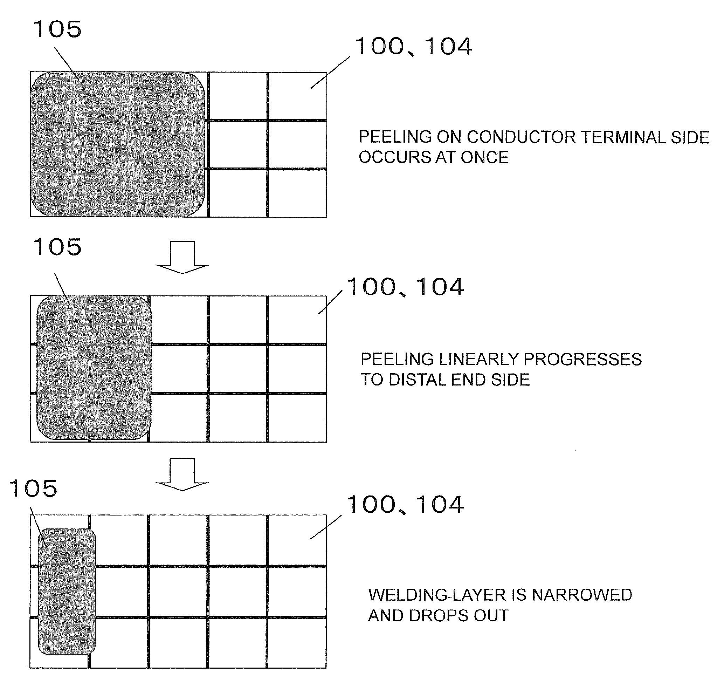

Fig. 2 is a diagram for explaining a dropout mechanism of a rail bond in a conventional technique of the present invention. Fig. 2 shows a state of the rail bond 100 when viewed from the welding region 104 side. As described in Problem 3 and Problem 4, vibration caused by train passing is given to the rail bond 100. At this time, in particular, stress caused by the vibration tends to be concentrated on the end-edge 103. As a result, as shown in the top of Fig. 2, a welding layer 105 on the end-edge 103 side is peeled at once. As shown in the middle of Fig. 2, peeling of the welding layer 105 gradually progresses on the opposite side of the end-edge 103. When the peeling progresses, as shown in the bottom of Fig. 2, the welding layer 105 decreases to cause the rail bond 100 to drop out.

As described above in Fig. 2, because of Problem 1 to Problem 4, the conventional rail bond 100 early drops out with vibration from trains running on rails. Even though the rail bond 100 does not drop out, peeling of the welding layer progresses to increase the electric resistance of the rail bond 100, and trains cannot be detected.

In this manner, in the rail bond, the maximization of a load caused by diffusion of heat and vibration at the edge is a cause of peeling or dropout. The problem is solved to achieve the durability of the rail bond in use (consequently, improvement of detection accuracy of trains).

### (First Embodiment)

### (Overall Outline)

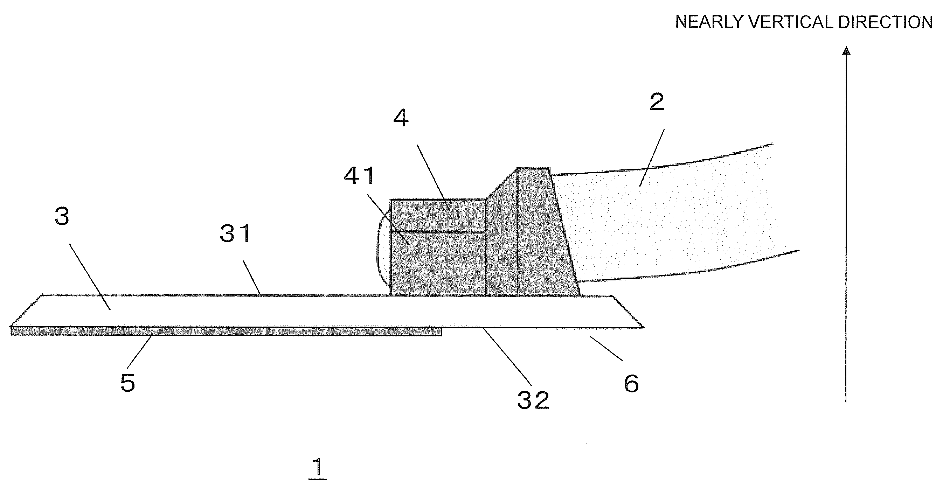

An overall outline of a rail bond according to a first embodiment of the present invention will be described below. Fig. 3 is a side view of a rail bond in the first embodiment of the present invention. Fig. 3 shows a state of the rail bond when viewed from a side surface and partially shows a conductor.

The rail bond 1 includes a conductor 2, a terminal 3, and an end-edge 4. The conductor 2 electrically connects separately adjacent rails to each other by loading the rail bond 1 on the rails. The conductor 2 is a bunch of bare wires to have flexibility. The flexibility can curve the conductor 2 to connect the adjacent rails to each other.

The terminal 3 is electrically connected to the conductor 2 and welded on a side surface of the rail. The end-edge 4 is a member joined to the terminal 3, and the conductor 2 is connected to the end-edge 4. The end-edge 4 has a hole 41 (Fig. 3 shows a state obtained after the conductor 2 has been inserted into the hole). The conductor 2 is inserted into the hole 41 and then clamped, and the conductor 2 is fixed to the end-edge 4. As a result, the conductor 2 is connected to the terminal 3.

The terminal 3 has a bottom surface 32 welded on the side surface of the rail and an upper surface 31 serving as a surface which is an opposite surface and to which the end-edge 4 is joined. The bottom surface 32 has the welding region 5 welded on the side surface of the rail and an opening region 6 which does not serve as a welding region because no welding agent is applied to the opening region 6. The welding region 5 serves as a welding layer such that a welding agent such as solder is applied to the welding region 5. With this configuration, in the rail bond 1, the welding region 5, the terminal 3, the end-edge 4, and the conductor 2 are laminated on the side surface of the rail in the order named.

In a direction almost perpendicular to the side surface of the rail, the welding region, 5, the terminal 3, the end-edge 4, and the conductor 2 have a predetermined relationship with respect to at least one of positions, mutual shapes, lamination, and a lamination structure. In the rail bond 1, the elements constituting the rail bond 1 have a predetermined relationship with respect to the side surface of the rail to make it possible to achieve durability which can cope with vibration caused by train passing.

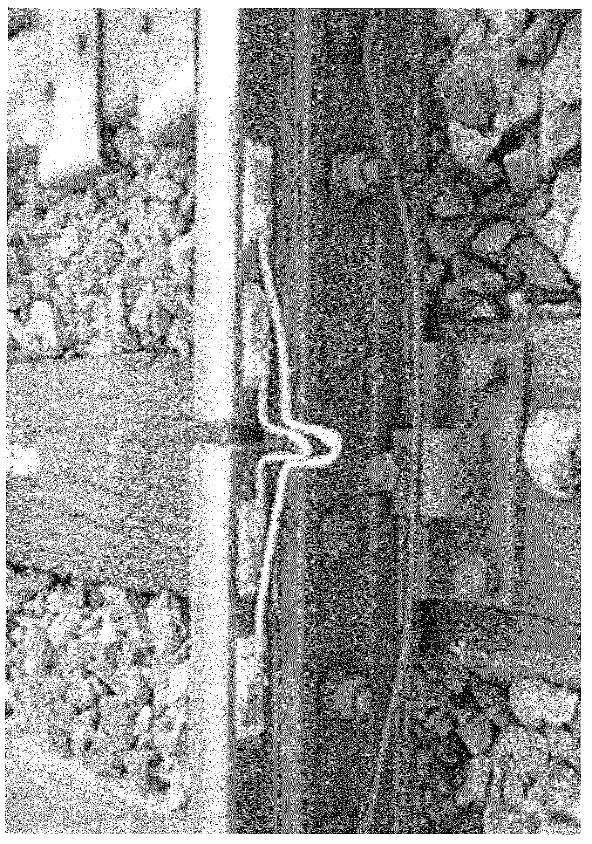

The rail bond 1 includes one pair of terminals 3 at both the edges of the conductor 2, and is used to connect rails to each other. Fig. 4 is a photograph of rails to which the rail bond according to the first embodiment of the present invention is applied. One of the terminals 3 is welded on one of adjacent rails. The other terminal 3 is welded on the other rail. Since one pair of terminals 3 are electrically connected by the conductor 2, the adjacent rails are electrically connected to each other.

The end-edge 4 is formed on one edge of the terminal 3, and the conductor 2 fixed at the end-edge 4 extends in an opposite direction of an extending direction of the terminal 3. More specifically, by using the end-edge 4 as a base point, the terminal 3 extends in one direction, and the conductor 2 extends in the other direction. Since the other edge of the conductor 2 is fixed to the other terminal 3 (or the end-edge 4), for a structure that connects one pair of terminals 3 to each other with the conductor 2, the end-edge 4 is formed on one edge of the terminal 3. As a result, at the edge on which the end-edge 4 is formed, the conductor 2 is floated, and vibration given to the conductor 2 generates high stress at the end-edge 4.

In this manner, stress of vibration from trains running on the rails is concentrated on the end-edge 4, and tends to more strongly act on a terminal edge of the terminal 3. However, since the welding region 5, the terminal 3, the end-edge 4, and the conductor 2 have a predetermined relationship, the rail bond 1 according to the first embodiment can cope with stress caused by vibration which is easily given to the edge of the terminal 3, the end-edge 4, and the like. As a result, the rail bond 1 is not easily peeled from the terminal edge of the terminal 3 and exerts high durability.

In particular, with patterns of concrete predetermined relationships (will be described below), high durability can be achieved.

### (Welding Region and Opening Region)

The rail bond 1 can achieve high durability due to a relationship between the welding region 5 and the opening region 6. A bottom surface 32 of the terminal 3 serves as a surface welded on the side surface of the rail. A welding agent (for example, solder or the like) is applied to the bottom surface 32 to weld the terminal 3 on the side surface of the rail. The region to which the welding agent is applied serves as a welding region 5 on the bottom surface 32. The position and the area of the welding region 5 may be determined according to specifications in advance. Depending on the size of the terminal 3 and the type of the rail bond 1, a predetermined part of the bottom surface 32 need only be determined as the welding region 5.

On the other hand, in some region of the bottom surface 32, no welding agent is applied. This region serves as the opening region 6. In the opening region 6, the bottom surface 32 and the side surface of the rail are not welded to each other. For this reason, the terminal 3 is welded on the side surface of the rail in only the welding region 5 on the bottom surface 32. When the welding region 5 is welded with the welding agent, a welding layer is formed between the side surface of the rail and the bottom surface 32 of the terminal 3.

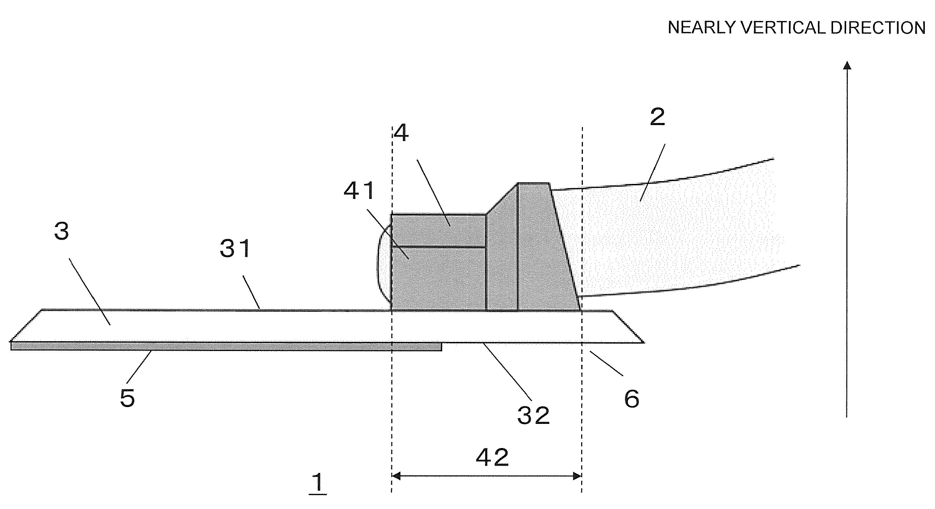

At this time, the opening region 6 is formed at least a part of the end-edge region serving as a region in which the end-edge 4 faces the side surface of the rail. Fig. 5 is a side view of the rail bond according to the first embodiment of the present invention. As is apparent from Fig. 5, the opening region 6 is formed on at least a part of an end-edge region 42 in which the end-edge 4 faces the side surface of the rail. In other words, the end-edge region 42 includes the opening region 6. As a matter of course, since the opening region 6 is formed on at least the part, the opening region 6 may be formed in the entire area of the end-edge region 42.

In this manner, the opening region 6 is formed in the end-edge region 42 facing the end-edge 4. For this reason, at the end-edge 4 to which stress caused by giving vibration is easily applied, the welding layer obtained by the welding agent is not originally formed. Since the welding layer is not formed, the welding layer is suppressed from being broken or peeled by stress.

As described above, in the end-edge region 42, since the opening region 6 is formed (in particular, the opening region is formed in a range from an edge on the conductor 2 side to the inside of the bottom surface 32), the welding layer is not easily broken or peeled on the edge (end-edge 4) on the conductor 2 side to which large stress caused by vibration is applied. When the rail bond 1 is welded on the rail with heat treatment, heat can be suppressed from being diffused to the conductor on the edge of the terminal, a heat treatment time can be shortened, and the rail bond can be easily applied. As a result, as a matter of course, the rail bond 1 does not easily drop out.

The area of the opening region 6 is preferably 50% of the area of the end-edge region 42. The opening region 6 can cope with stress caused by vibration easily concentrated on the end-edge region 42. This is because the opening region 6 is 50% or more of the area of the end-edge region 42 to make it possible to decrease an influence on the welding layer formed in the welding region 5 by half. Fig. 5 shows a state in which 50% or more of the area of the end-edge region 42 are occupied with the opening region 6.

Alternatively, the opening region 6 may include all the area of the end-edge region 42. More specifically, the entire area of the end-edge region 42 may be occupied with the opening region 6. When the entire area of the end-edge region 42 is occupied with the opening region 6, the welding layer is suppressed from being broken or peeled by stress acting on the end-edge region 42. Furthermore, when the rail bond is welded on a rail by heat treatment, only the upper surface 31 of the terminal 3 need only be heated, and workability is considerably improved.

An area ratio of the opening region 6 to the end-edge region 42 need not always be adjusted, and an area ratio of the opening region 6 to the bottom surface 32 of the terminal 3 may be adjusted. Alternatively, the areas need not always be adjusted, the lengths may be adjusted. For example, on the bottom surface 32, a ratio of the length of the opening region 6 extending from the edge on the conductor 2 side on the bottom surface 32 along the rail to the length of the welding region 5 may be adjusted. With the adjustment of the ratio of the lengths, the rail bond can cope with stress caused by vibration concentrated on the end-edge 4 (end region 42).

The ratio of the area of the opening region 6 to the area of the end-edge region 42 may be arbitrarily determined depending on the size of the rail bond 1, the characteristics of rails, and the like.

As described above, when the welding region 5 and the opening region 6 are formed on the bottom surface 32 of the terminal 3, the rail bond 1 is easily prevented from being damaged or dropping out by stress acting on the end-edge 4 (end region 42) by vibration acting from the conductor 2. More specifically, when the area ratio of the opening region 6 to the end-edge region 42 on which stress is easily concentrated is adjusted, the rail bond can greater cope with the stress. As a result, the durability of the rail bond 1 in use is improved.

### (Relationship between Length and Width of Terminal)

A relationship between the length and the width of the terminal 3 to improve the durability of the rail bond 1 in use will be described below.

Vibration of a rail caused by train passing vibrates the conductor 2 of the rail bond 1. The vibration acts as stress to the end-edge 4, and is transmitted to the terminal 3 connected to the end-edge 4 as stress. The stress transmitted to the terminal 3 progresses the breakdown of the welding layer of the welding region 5. Although stress generated in the terminal 3 tends to be maximally influenced to the terminal edge, the stress can be reduced by terminal shapes.

When the shape of the bottom surface 32 of the terminal 3 is rectangular here, the bottom surface shape can be defined by a ratio of a terminal length which is the length of the terminal 3 along the side surface direction of the rail and a terminal width in a height direction of the rail.

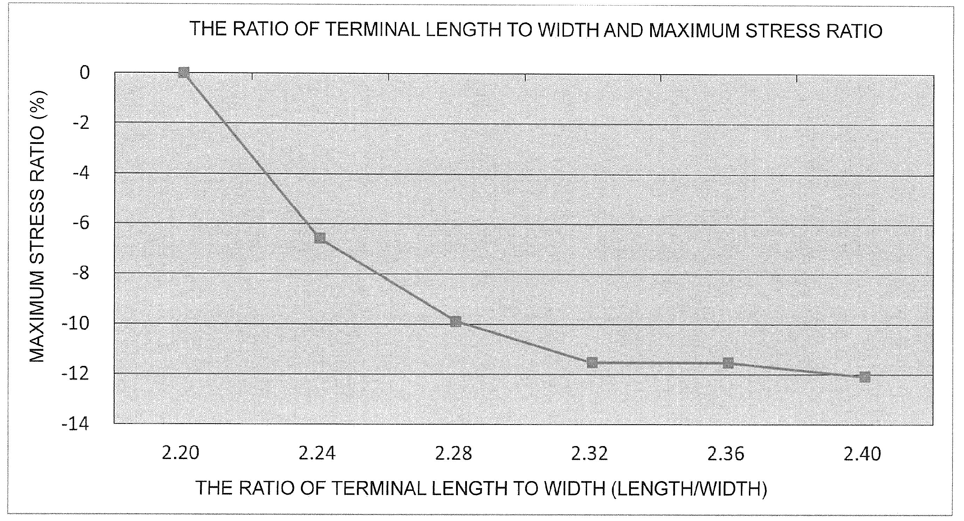

A static analysis result of the rail bond 1 is shown in Fig. 6. Fig. 6 is a graph showing a relationship between a ratio of the length and the width of the terminal and stress acting on the terminal. On the basis of the graph in Fig. 6, when the ratio of the length and the width of the terminal is increased to some extent, the stress decreases. Even though the ratio is further increased, a reduction in stress does not appear as a result. In other words, it can be understood that, within a predetermined terminal width, the terminal length extends to some extent to make it possible to reduce stress acting on the terminal edge. The ordinate of the graph in Fig. 6 indicates a stress reduction rate. In the graph, a point where a ratio of the length and the width of the terminal is 2.3 is defined as a reference point. The graph shows that the stress decreases when the ratio of the length and the width of the terminal increases. On the other hand, when the ratio is 2.3 or more, the stress reduction rate begins to be converged. It is understood that, although a drastic advantage cannot be obtained even though the ratio is increased, the stress reliably decreases.

As a result, it may be considered that the ratio is preferably 2 or more, and, more preferably, 2.3 or more. For example, although the rail bond 1 is welded on the side surface of the rail, the height of the side surface of the rail (corresponding to the width of the terminal 3) is limited to a predetermined height on the basis of the shape of the rail (this is because the rail is determined by the standards). As a result, since the width of the terminal 3 is automatically determined, the length of the terminal 3, as described above, is preferably twice or more the width, preferably, 2.3 times or more the width. In this manner, the terminal 3 preferably has a length twice or more, preferably, 2.3 times or more the width depending on a height (width of the terminal 3) at which the terminal 3 can be welded on the side surface of the rail.

### (Relationship between Terminal and End-edge)

A relationship between the terminal 3 and the end-edge 4 to improve the durability of the rail bond 1 in use will be described below.

A terminal length which is the length of the terminal 3 along the side surface direction of the rail is three times or more an end-edge length which is the length of the end-edge 4 along the side surface direction of the rail, preferably, four times or more the end-edge length. The bottom surface 32 of the terminals 3 is welded on the side surface of the rail by the welding region 5. For this reason, the terminal length is one reference which generates welding force of the rail bond 1. On the other hand, stress caused by vibration acting on the conductor 2 is concentrated on the end-edge 4. In other words, the end-edge length of the end-edge 4 is one reference which generates dropout properties of the rail bond 1.

As described above, the relationship between the terminal length and the end-edge length is defined to improve the durability of the rail bond 1 in use.

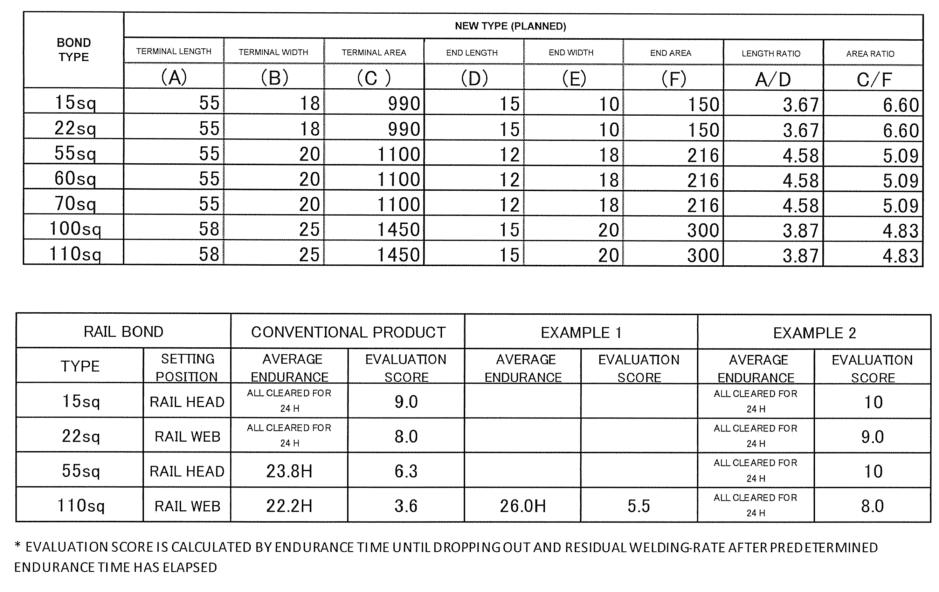

When the terminal length is three times or more the end-edge length, welding force obtained by the terminal 3 is sufficient, and the durability of the rail bond 1 in use is improved. Fig. 7 is a table showing a test-production result of a prototype of a rail bond in which a ratio of a terminal length and an end-edge length and a ratio of a terminal area and an end-edge area are changed in the first embodiment of the present invention. As is apparent from Fig. 7, it is understood that, when the terminal length is three times or more the end-edge length, the durability of the rail bond 1 in use is improved. As shown in a lower table in Fig. 7, the durability in use is scored on the basis of a residual ratio of the welding layer after a predetermined period of time has elapsed.

As is apparent from Fig. 7, the terminal length is further preferably four times or more the end-edge length. Since the terminal length is three times or more, preferably, four times or more the end-edge length, as a matter of course, the welding force obtained by the terminal length is considerably greater than the dropping properties obtained by the end-edge length. As a result, the durability of the rail bond 1 in use is improved.

In the structure of the rail bond 1, the end-edge 4 is formed on the upper surface 31 of the terminal 3, and the end-edge 4 must be fixed to the conductor 2 extended on the opposite side of the distal end of the terminal 3. Since the conductor 2, in the structure thereof, must be isolated from the rail side surface, the conductor 2 vibrates in accordance with train passing. For this reason, strong stress is inevitably concentrated on the end-edge 4. The terminal length of the terminal 3 must cope with the stress concentrated on the end-edge 4.

On the other hand, when the terminal length is excessively increased, the area of the welding region 5 is excessively large. When the area of the welding region 5 is excessively large, an amount of welding agent such as solder increases to make an attaching operation of the rail bond 1 inconvenient. Furthermore, when the welding agent increases, the probability of damaging the welding agent unexpectedly increases to damage the durability of the rail bond 1 in use. For this reason, the ratio of the terminal length and the end-edge length is preferably optimized. As is apparent from Fig. 6, it is an optimum solution that the terminal length is three times or more, preferably, four times or more the end-edge length.

The area (terminal area) of the bottom surface 32 of the terminal 3 is four times or more the area (end area) of the end-edge region 42, preferably, five times or more the area. As is apparent from the table in Fig. 7, the terminal area is four times or more or five times or more the end-edge area. The terminal 3 and the end-edge 4 having the area ratio exert strong welding force.

As described above, the terminal area exerts the welding force of the rail bond 1 because the terminal layer is formed in the terminal area. On the other hand, the end-edge area is an index of degree of influence of stress caused by vibration. For this reason, the ratio of the terminal area and the end-edge area is optimized to prevent the welding layer from being damaged or peeled and to prevent the rail bond 1 from dropping out.

In comparison with the ratio of the terminal length of the terminal 3 and the end-edge length of the end-edge 4, when an area ratio is used, for example, the invention can cope with a case in which the shape of the terminal 3 does not straightly extend but is widened or curved toward the distal end. For example, when the terminal 3 has a shape which is widened from the end-edge 4 to the distal end, as described above, the ratio of the lengths may not be three or more or four or more. This is because the ratio of the areas can be four or more or five or more.

In this manner, the ratio of the terminal area and the end-edge area is adjusted to make it possible to reduce the probability of causing the rail bond 1 to drop out.

Alternatively, on the bottom surface 32 of the terminal 3, depending on an area ratio of the welding region 5 to which a welding agent is applied to be a welding layer and the opening region 6 to which no welding agent is applied, the durability of the rail bond 1 in use is preferably improved. The opening region 6 is formed on at least a part of the end-edge region 42. Stress caused by vibration is concentrated on the end-edge region 42. For this reason, the opening region 6 is formed in the end-edge region 42 to easily prevent the welding layer from being damaged or peeled by the stress. More specifically, the durability of the rail bond 1 in use obtained when the entire area of the bottom surface 32 of the terminal 3 serves as a welding region to obtain a welding layer is better than that obtained when the opening region 6 is formed on a part (in particular, the end-edge region 42) of the bottom surface 32.

On the other hand, when the opening region 6 is excessively large, an area for forming the welding layer is small to deteriorate the welding force as a matter of course. This is because, when most of the terminal area which is the area of the bottom surface 32 is occupied with the opening region 6, the welding layer decreases to reduce the welding force.

For this reason, an area ratio of the welding region 5 and the opening region 6 in the terminal area is preferably adjusted to an optimum value to make the degree of welding and ability to cope with vibration compatible. As an example, the welding region 5 is preferably 80% or less of the terminal area. When the opening region 6 can secure 20% of the terminal area, the ability to cope with vibration stress is improved. Alternatively, the opening region 6 may be about 10% or more and 20% or less of the terminal area. In other words, the welding region 5 preferably occupies about 70% to 90% of the terminal area.

In this manner, the area ratio of the welding region 5 and the opening region 6 with respect to the terminal area is adjusted to prevent the rail bond 1 from dropping out and to improve the durability in use.

The ratio of the lengths or the areas described here is an example. For example, depending on the structure of the terminal 3 or the end-edge 4 and the structure or the material of a rail to be applied, selection of another ratio is not excluded.

For example, when the rail bond 1 has a configuration in which the width of the terminal 3 near the distal end is larger than the width of the terminal 3 near the end-edge 4, as a ratio of the lengths of the terminal 3 and the end-edge 4, another ratio may be selected. Alternatively, depending on the material of the terminal 3 or the material of the welding agent, as a ratio of areas, another ratio may be selected.

As described above, in the rail bond 1 according to the first embodiment, the welding region 5, the terminal 3, the end-edge 4, and the conductor 2 have a predetermined relationship. In particular, depending on formations of the welding region 5 and the opening region 6 and a relationship therebetween, in response to vibration stress, high durability in use can be achieved.

### (Second Embodiment)

A second embodiment will be described below. In the second embodiment, on the basis of the shapes of the terminal 3 and the end-edge 4 or a structural relationship between the terminal 3 and the end-edge 4, the rail bond 1 having high durability in use will be described below.

### (Bottom Surface Area and Upper Surface Area of Terminal)

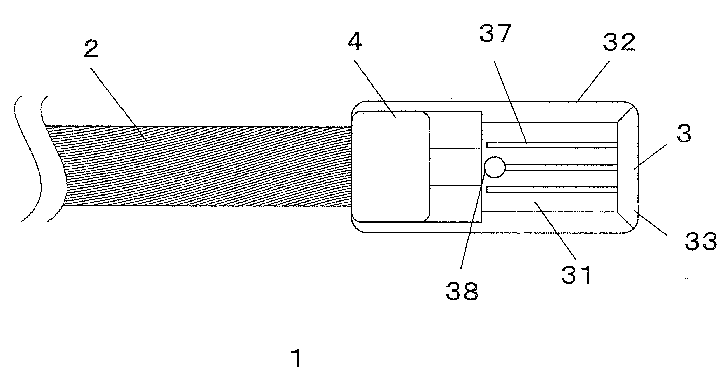

Figure 8 is a front view of a rail bond according to a second embodiment of the present invention. Figure 8 shows a state obtained when the rail bond 1 is viewed from the above. Since the rail bond 1 is attached to a side surface of a rail, when the rail bond 1 is viewed from the outside of the rail after the rail bond is attached, an aspect as shown in Figure 8 is obtained.

The terminal 3 has the upper surface 31 and the bottom surface 32. Although the bottom surface 32 is hidden in Figure 8, as shown in Figure 3 or the like, a surface welded on the side surface of the rail is the bottom surface 32. Even after the upper surface 31 is attached to the side surface of the rail, as shown in Figure 8, the surface 31 is in a visible state. The end-edge 4 is attached to the upper surface 31.

In this case, a bottom surface area which is the area of the bottom surface 32 of the terminals 3 is preferably larger than an upper surface area which is the area of the upper surface 31 of the terminal 3. In Figure 8, at least a part of the outer periphery of the terminal 3 has a notch 33. The notch 33 is formed to extend from the upper surface 31 of the terminal 3 to the bottom surface 32. More specifically, the notch 33 lowers to spread from the upper surface 31 of the terminal 3 to the bottom surface 32. At this time, the upper surface 31 preferably has a high hardness, and the notch 33 preferably has a low hardness. That is, the bottom surface 32 is constituted by a region corresponding to the upper surface 31 having a high hardness and a region corresponding to the notch 33 having a low hardness.

The outer periphery of the terminal 3 has a structure in which the outer periphery lowers from the upper surface 31 to the bottom surface 32 by the notch 33 (the bottom surface area is larger than the upper surface area), and peeling of the bottom surface 32 by vibration acting on the terminal 3 is reduced.

Stress of vibration is maximized on the upper surface 31 of the terminal 3. In contrast to this, the bottom surface 32 of the terminal 3 exerts welding force obtained by welding in the welding region 5. It is considered that since the hardness of the region corresponding to the notch 33 is lower than that of the region of the bottom surface 32 corresponding to the upper surface 31, the stress of vibration may be absorbed. Since the bottom surface area which exerts welding force is larger than the upper surface area of the upper surface 31 which maximizes the stress of vibration, the welding force easily exceeds the stress. As a result, the terminal 3 is easily difficult to be peeled.

In Figure 8, although the notches 33 are formed in the entire area of the outer periphery of the terminal 3 (part under the conductor 2 is hidden for the illustrative convenience), the notch 33 may be formed in only a part of the outer periphery of the terminal 3. A shape spreading from the upper surface 31 of the terminal 3 to the bottom surface 32 thereof is expressed as a "notch" here. However, the terminal is not necessarily cut down or cut away in the manufacturing steps. The shape spreading from the upper surface 31 to the bottom surface 32 need only be formed by various means such as a molding process and a cutting process.

The notch 33 is formed in the outer periphery of the terminal 3 to achieve the bottom surface area of the terminal 3 which is larger than the upper surface area of the terminal 3. However, the difference between the upper surface area and the bottom surface area may be achieved by another means.

### (Part under Conductor)

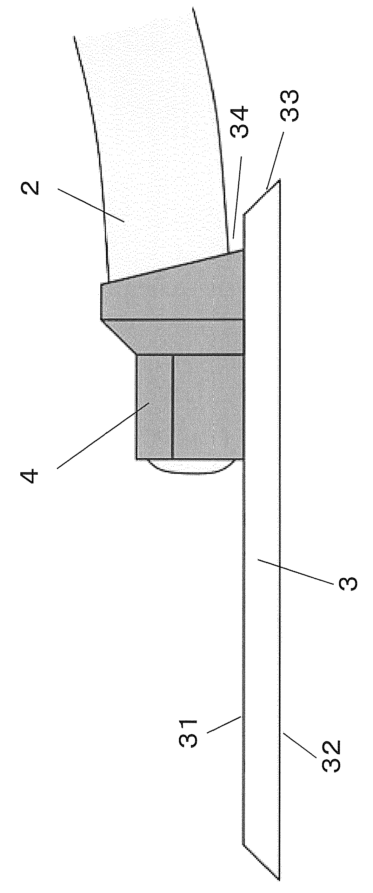

Although the notch 33 is formed in at least a part of the outer periphery of the terminal 3, the notch 33 is preferably formed in a part under the conductor 2. Figure 9 is a side view of a rail bond in the second embodiment of the present invention. In the rail bond 1 in Figure 9, the notch 33 is formed in the outer periphery of the terminal 3.

In this case, the notch 33 is formed in a part under the conductor 2 (The notch 33 is arbitrarily formed in another part. In Figure 9, the notch 33 is also formed in another part).

Since the conductor 2 connects one pair of terminals 3 to each other, the conductor 2 is floated from the rail and the terminals 3. For this reason, trains runs on the rail, the conductor 2 vibrates with strong vibration. With this vibration, strong stress acts on the end-edge 4 to which the conductor 2 is joined. The end-edge 4 is joined to one edge of the terminal 3 which is the upper surface 31 of the terminal 3. For this reason, stress acting on the end-edge 4 may easily act on the edge of the terminal 3 on the end-edge 4 side.

As shown in Figure 9, at the part under the conductor 2, the terminal 3 has the notch 33 to prevent the terminal 3 from easily beginning to be peeled from the edge of the terminal 3 on the end-edge 4 side. As described above, this is because the bottom surface 32 exerting welding force is larger than the upper surface 31 to which the stress is influenced. This is also because the end-edge 4, as a matter of course, is inclined from the bottom surface 32 to the upper surface 31 to obtain a structure in which the terminal 3 is not easily peeled by the stress acting on the end-edge 4. As a result, the terminal 3 has high durability against the acting on the end-edge 4.

For example, although the notch 33 is not formed in the distal end (opposite side of the end-edge 4) of the terminal 3, the notch 33 is preferably formed on the end-edge 4 side. In this case, the invention can easily cope with stress acting on the end-edge 4.

The end-edge 4 is joined to the upper surface 31 of the terminal 3. On the joined portion to be jointed, the end face of the terminal 3 also preferably reaches the outside (on the conductor 2) of the end face of the end-edge 4. In Figure 9, the end face of the terminals 3 reaches the outside of the end face of the end-edge 4 to which the conductor 2 is fixed. More specifically, the edges of the conductor 2 and the terminal 3 form a gap 34 where the edges face each other without the end-edge 4.

In this manner, the end face of the terminal 3 can be configured to reach the outside of the end face of the end-edge 4. As a result, between the conductor 2 and the terminal 3, the gap 34 is formed. The conductor 2 is floated from the rail and the terminal 3. As a result, the conductor 2 is vibrated by trains running on rails to generate vibration. As a result of the vibration, strong stress acts on the end-edge 4. Furthermore, although stress generated in the end-edge 4 generates stress in the terminal 3, the configuration (gap 34) in which the end face of the terminal 3 reaches the outside of the end face of the end-edge 4 can reduce stress generated in the end face of the terminal 3 and also move a point on which the maximum stress acts to the inside (distal end side) of the end face. As a result, peeling of the terminal 3 from the end face thereof does not easily progress.

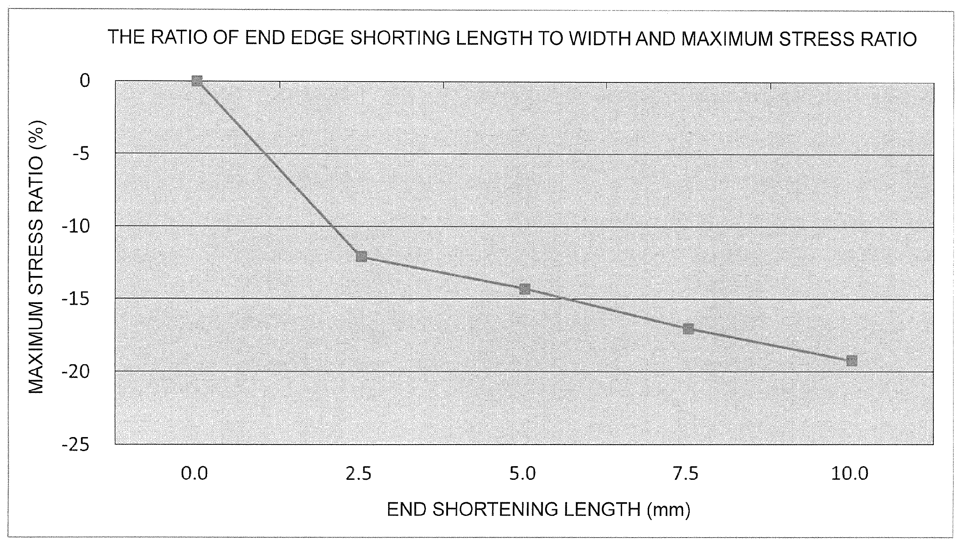

An example of a static analysis result about the advantage of the gap 34 is shown in Figure 10. Figure 10 is a graph showing a result obtained by statically analyzing an advantage of the gap in the second embodiment of the present invention. The ordinate in Figure 10 indicates a reduction rate of stress acting on the rail bond 1 as a ratio to the maximum stress (in Figure 10, shown as a maximum stress ratio in a percentage). On the other hand, the abscissa in Figure 10 indicates a distance generated by the gap 34 between the end face (on the conductor 2 side) of the terminal 3 and the end face (on the conductor 2 side) of the end-edge 4 as an end-edge shortening length.

More specifically, 0.0 mm on the abscissa indicates a state in which the end faces of the terminal 3 and the end-edge 4 are aligned (when neither the gap 34 nor the inclined notch are formed), and the other values on the abscissa show a state in which, due the presence of the notch or the gap 34, the end face of the end-edge 4 is located at a position farther than the end face of the terminal 3 from the conductor 2.

According to the graph in Figure 10, when the end face of the end-edge is shortened by 5 mm, the maximum stress can be reduced by 14.3%. In addition, a maximum stress point moves from the edge of the terminal to a side far from the conductor 2 by a length corresponding to about 17% of the terminal length. In this manner, breakdown of the welding layer beginning from the terminal edge is considerably moderated. When a distance between the end face of the terminal 3 and the end face of the end-edge 4 increases, an advantage of a reduction in stress is improved. In this manner, the advantage of the reduction in stress caused by the gap 34 (or an inclined notch extending from the upper surface of the terminal 3 to the bottom surface thereof) is recognized. Although only the static analysis result is shown, since the stress is reduced, a preferable result may be obtained even in a dynamic endurance test.

The gap 34 is actually formed such that the end-edge 4 is joined on an inner side of the end face of the terminal 3. Alternatively, after the end-edge 4 is joined to the upper surface 31 of the terminals 3, the gap 34 may be formed by partially cutting the end-edge 4. As shown in Figure 9, the upper surface area of the terminal 3 is smaller than the bottom surface area thereof due to the notch 33, and the gap 34 is formed to strengthen the resistance to peeling of the terminal 3 from the end-edge 4 by vibration of the conductor 2. As a result, the rail bond 1 can achieve higher durability. Consequently, the rail bond 1 can be easily prevented from dropping out.

The size of the gap 34 may be arbitrarily determined. Although the gap 34 is preferably formed under the conductor 2, the gap 34 may be formed in an entire area of the conductor 2 in the width direction, or may be formed in only a part of the conductor 2. Furthermore, a flexible material may be filled in the gap 34.

The rail bond 1 according to the second embodiment can achieve higher durability in use by various devices.

### (Third Embodiment)

A third embodiment will be described below.

The third embodiment explains a rail body that improves durability in use by various devices in the bottom surface 32 and the upper surface 31 of the terminal 3.

### (Groove in Terminal Bottom Surface)

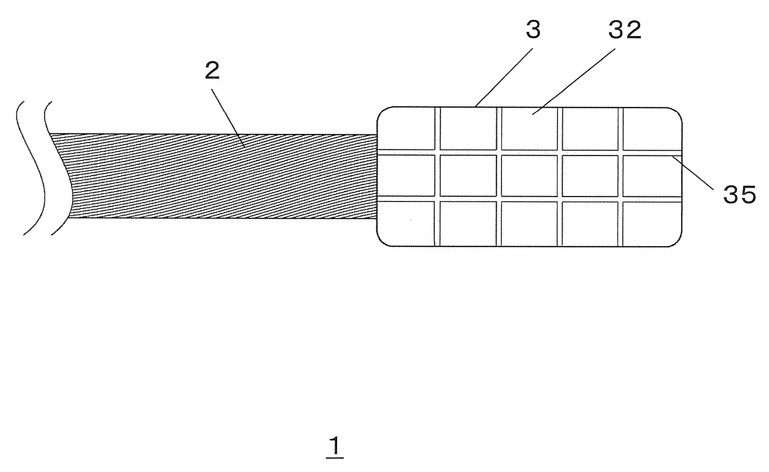

Figure 11 is a bottom view of a rail bond according to the third embodiment of the present invention. The rail bond 1 has the same constituent elements as described in the first and second embodiments such as the terminal 3 and the end-edge 4. In this case, the bottom surface 32 of the terminal 3 preferably has a pattern groove 35 having a predetermined pattern. The pattern groove 35 can easily remove air bubbles generated in a welding agent (for example, solder or flux) applied to and welded on the welding region 5 on the bottom surface 32 to the outside.

For example, the welding agent is applied to the welding region 5, and the welding agent welds the terminal 3 on a side surface of a rail in the welding region 5 by heat or ultrasonic wave. At this time, air bubbles are generated inside the welding agent by heat treatment. When there is no escape route for the air bubbles, the air bubbles are easily generated. The air bubbles inside the welding agent such as solder deteriorate welding force and will form cracks or damages in the future, and may cause the terminal 3 to be peeled or cause the rail bond 1 to drop out.

In contrast to this, the pattern groove 35 can form a space between the welding agent and the bottom surface 32. The space can move air bubbles generated in, especially, the welding agent. As a result, the air bubbles which are easily generated when heat treatment of the welding agent is performed can be let out of the bottom surface 32 through the pattern groove 35. As a result, air bubbles are not easily generated inside the welding agent, and the welding layer does not have air bubbles (or a small number of air bubbles). Consequently, the welding layer makes cracks or damage difficult to be generated, and the rail bond 1 is not easily peeled or does not easily drop out.

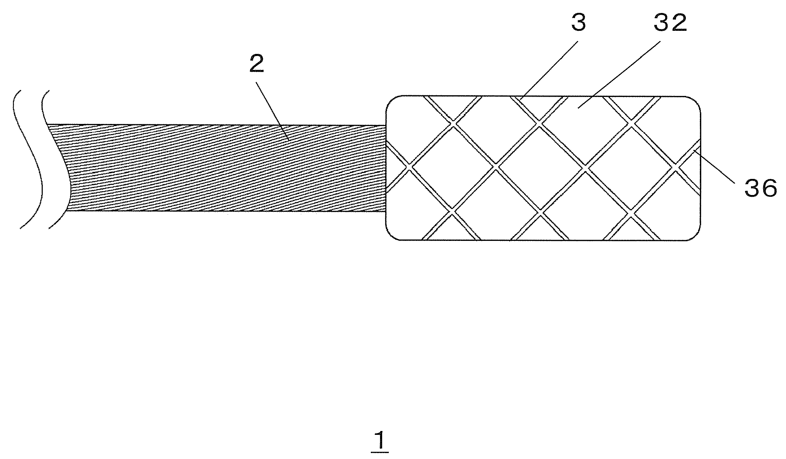

The pattern of the pattern groove 35 may be arbitrarily determined. Figure 11 shows the grid-like pattern groove 35. Alternatively, the pattern groove may be a slant-grid-like slant-grid groove. Figure 12 is a bottom view of a rail bond according to the third embodiment of the present invention. The bottom surface 32 of the terminal 3 shown in Figure 12 has a slant-grid-like slant grid groove 36. Since the pattern groove 36 has a slant-grid-like shape, the pattern groove 36 can equally let out air bubbles in the four directions of the bottom surface 32. As a matter of course, the patter groove 36 having a slant-grid-like shape can make air bubbles easily generated in the welding agent difficult to be generated. For this reason, the welding layer obtained by solidifying the welding agent is not easily cracked or damaged. As a result, the rail bond 1 can be easily prevented from being peeled or dropping out. Furthermore, the pattern groove 36 can easily prevent a phenomenon in which the terminal is broken along longitudinal grooves of the grid due to metal fatigue caused by stress in the terminal 3.

Figure 11 and Figure 12 show the grid-like pattern groove 35 and the slant-grid-like pattern 36. The bottom surface 32 may have a pattern groove having a pattern shape except for the above pattern shapes. Any pattern groove may be used as long as the pattern groove can easily let bubbles in a welding agent out.

### (Groove in Upper Surface of Terminal)

The terminal 3 preferably has a single groove or a plurality of grooves on the upper surface 31 along the direction of a rail.

Figure 8 shows grooves 37 formed on the upper surface 31 of the terminal 3. The grooves 37 are formed in the upper surface 31 along the direction of the rail (In

Figure 8, although no rail is shown, the rail bond 1 welded on a side surface of the rail along the longitudinal direction of the terminals 3. For this reason, the grooves 37 are along the direction of the rail). The grooves 37 are preferably shaped when the terminal 3 is formed. In particular, the hardness of the upper surface 31 of the terminal 3 is preferably increased by processing the upper surface 31 by press working or the like. This is because, as described above, the bottom surface 32 of the terminal desirably has a hard region corresponding to the upper surface 31.

Furthermore, when the grooves are formed in the direction of the rail, the hard region can be distributed in the direction of the rail. In this manner, a phenomenon in which the terminal 3 is broken in a direction almost perpendicular to the rail direction due to metal fatigue caused by stress generated in the terminal 3 can be easily prevented. When the terminal 3 is broken, the conductor 2 immediately drops out, and the rails are electrically disconnected from each other to fail in detection of trains. Consequently, a serious accident may occur.

The grooves 37, as described above, plays a role to improve the welding force of the bottom surface 32 and to prevent the terminal 3 from being broken.

Although the terminal 3 has the three grooves 37 in Figure 8, the number of grooves 37 may be one or two or more.

As described above, in the rail bond 1 according to the third embodiment, the terminal is devised to make it possible to prevent a change in performance and deterioration of performance before and after the rail bond 1 is welded on rails.

Each of the rail bonds described in the first to third embodiments is an example for explaining the spirit and scope of the present invention, and includes changes and modifications without departing from the spirit and scope of the present invention.

### Reference Signs List

1...rail bond
2... conductor
3...terminal
31...upper surface
32...bottom surface
33...notch
34..gap
35...pattern groove
36...pattern groove
37...groove
38...concave portion
4...end-edge
5...welding region
6...opening region

## Claims

1. A rail bond comprising:
a conductor that electrically connects rails separately adjacent to each other;
terminals electrically connected to the conductor and welded on side surfaces of the rails; and
end-edges at which the conductor is connected to the terminals, wherein
each of the terminals has a welding region welded on the side surface of the rail, and,
in a direction almost perpendicular to the side surface of the rail, the welding region, the terminal, the end-edge, and the conductor have a predetermined relationship with respect to at least one of positions, mutual shapes, lamination, and a lamination structure.

2. The rail bond according to claim 1, wherein
the terminal has a bottom surface facing the side surface of the rail, the welding region is included in the bottom surface,
the conductor is a bunch of bare wires,
the end-edge is formed on an upper surface of the terminal and has a hole in which the conductor is inserted and clamped.

3. The rail bond according to claim 1 or claim 2, wherein the welding region, the terminal, the end-edge, and the conductor are laminated on the side surface of the rail in the order named.

4. The rail bond according to any one of claims 1 to 3, wherein
the welding region forms a welding layer by a welding agent such that the terminal is welded on the side surface of the rail.

5. The rail bond according to any one of claims 1 to 4, wherein
an end-edge region in which the terminal faces the side surface of the rail has an opening region which does not include the welding region.

6. The rail bond according to claim 5, wherein
an area of the opening region occupies 50% or more of the area of the end-edge region.

7. The rail bond according to any one of claims 1 to 6, wherein
a terminal length which is a length of the terminal along a side surface direction of the rail is twice or more a terminal width which is a width of the terminal along a height direction of the rail, preferably, 2.3 times or more the terminal width.

8. The rail bond according to any one of claims 1 to 7, wherein
the terminal length which is the length of the terminal along the side surface direction of the rail is three times or more an end-edge length which is a length of the end-edge along the side surface direction of the rail, preferably, four times or more the end-edge length.

9. The rail bond according to any one of claims 5 to 8, wherein
a terminal area which is an area of the bottom surface of the terminal facing the side surface of the rail is four times or more an area of the end-edge region, preferably, five times or more the area of the end-edge region.

10. The rail bond according to any one of claims 1 to 9, wherein
an area of the welding region is 80% or less of the terminal area.

11. The rail bond according to any one of claims 1 to 10, wherein
the end-edge is formed on one edge of the terminal, and the conductor fixed at the end-edge extends in an opposite direction of an extending direction of the terminal.

12. The rail bond according to any one of claims 1 to 11, wherein
on the terminal, a bottom surface area of a bottom surface welded on the side surface of the rail is larger than a surface area of an upper surface on an opposite side of the bottom surface.

13. The rail bond according to claim 12, wherein
at least a part of an outer periphery of the terminal has a notch extending from the upper surface of the terminal to the bottom surface thereof, and, preferably, has a notch at a part under the conductor on the outer periphery of the terminal.

14. The rail bond according to any one of claims 1 to 13, wherein
the end-edge is joined to one edge of the terminal in the longitudinal direction, and, at the joint portion, the end face of the terminal reaches the outside of the end face of the end-edge.

15. The rail bond according to claim 14, wherein
the joint portion has a gap which the end-edge does not reach between the conductor and the terminal.

16. The rail bond according to any one of claims 1 to 15, wherein
the bottom surface of the terminal has a groove having a predetermined pattern.

17. The rail bond according to claim 16, wherein
the groove having the predetermined pattern is a grid groove or a slant grid groove.

18. The rail bond according to any one of claims 1 to 17, wherein
the upper surface of the terminals has a single groove or a plurality of grooves in a direction along rails.

19. A rail wherein
the welding region of the rail bond according to any one of claims 1 to 17 is welded on the rail.
